# EUROPÄISCHE PATENTANMELDUNG

(11) **EP 1 870 843 A1**
(43) Veröffentlichungstag der Anmeldung: **26.12.2007**
(21) Anmeldenummer: 06090116.2
(22) Anmeldetag: 22.06.2006
(51) Int. Cl.: G06Q 10/00, G01S 5/02, H04Q 7/38

(54) **Verfahren und System zur Bestimmung der Wegstreckenübereinstimmung zweier sich bewegender Objekte**

(71) Anmelder: Fraunhofer-Gesellschaft zur Förderung der angewandten Forschung e.V., 80686 München (DE)
(72) Erfinder: Meissen, Ulrich, 10435 Berlin (DE); Pfennigschmidt, Stefan, 10407 Berlin (DE)
(74) Vertreter: Pfenning, Meinig & Partner GbR

(57) **Zusammenfassung**

Es wird ein Verfahren und ein System zur Bestimmung der Wegstreckenübereinstimmung mindestens zweier sich bewegender Objekte über mindestens ein zellenbasiertes Funknetz mit Basisstationen und mobilen Kommunikationseinrichtungen, wobei jedem Objekt eine Kommunikationseinrichtung zugeordnet ist, vorgeschlagen. Dabei werden in zeitlichen Abständen Empfangsparameter der den Objekten zugeordneten mobilen Kommunikationseinrichtungen aufgezeichnet, die aufgezeichneten Empfangsparameter auf ihre Übereinstimmung überprüft und wenn die Empfangsparameter zeitlich übereinstimmende Muster aufweisen, wird entschieden, dass beide Objekte den gleichen Weg innerhalb des Funknetzes nehmen oder genommen haben.

## Beschreibung

Die Erfindung betrifft ein Verfahren und ein System zur Bestimmung der Wegstreckenübereinstimmung mindestens zweier sich bewegender Objekte nach dem jeweiligen Oberbegriff des Hauptanspruchs und des nebengeordneten Anspruchs sowie eine Verwendung des Systems.

Im Stand der Technik sind eine Vielzahl von Ortungsverfahren und Verfahren zur Bestimmung von Wegstrecken bekannt, von denen im Folgenden einige aufgeführt sind.

Bezüglich der relevanten Ortungstechniken nach dem Stand der Technik gibt es die satellitengestützte Ortung und die Funknetz-basierte Ortung. Die erste basiert auf der Nutzung einer Reihe von Satelliten, die die Erde auf bekannten Bahnen umkreisen und präzise Zeitsignale aussenden. Diese Zeitsignale werden durch eine Empfangseinheit ausgewertet und dadurch die geographische Position bestimmt. Durch Kenntnis der exakten Position von mindestens drei Satelliten und der Entfernung der Empfangeinheit zu ihnen lässt sich die Position relativ genau bestimmen. Beispiele für derartige Systeme sind das amerikanische GPS, das russische GLONASS und das europäische Galileo. Der Nachteil dieser Systeme ist die fehlende Verfügbarkeit bei Wegstrecken ohne "Sichtverbindung" (z.B. bei unterirdischem Streckenverlauf) zu einer ausreichenden Anzahl von Satelliten.

Funknetz-basierte Ortungstechniken nutzen bestehende Infrastrukturen zur drahtlosen Kommunikation, wie zum Beispiel Mobilfunknetze (GSM oder UMTS) oder lokale Funknetze, wie WLAN, usw. Um Positionsinformationen zu erhalten, werden hier verschiedene Basistechniken eingesetzt, die auch miteinander kombiniert werden können.

Ein erstes Verfahren ist das CGI-Verfahren (Cell of global identity), das die Identifikation und die geographische Lage einer Funkzelle, d.h. einer Basisstation als Näherung für die Position eines mit ihr verbundenen Endgerätes, z.B. eines Mobiltelefons nutzt. Die Präzision der Ortung hängt von der Größe der jeweiligen Funkzelle ab und kann in derzeitigen GSM-Netzen 100 m - 20 km betragen.

Ein zweites Verfahren ist das AOA-Verfahren (Angle of Arrival), das den Ankunftswinkel AOA ausnutzt. Mobilfunk-Basisstationen setzen häufig Antennen mit bestimmten Abstrahlungswinkeln, so genannte Segmentantennen ein. Dies ermöglicht die Einschränkung der Position eines Endgeräts auf ein entsprechendes Kreissegment.

Ein weiteres Verfahren zur Ortung ist das TA-Verfahren (Timing Advance). Dieses Verfahren kann in Mobilfunknetzen bei großen Zellen (> 1 km) verwendet werden, um die Entfernung des Endgeräts von der Basisstation näher zu bestimmen. Dazu wird die Tatsache ausgenutzt, dass die Kommunikation zwischen Endgerät und Basisstationen in exakt definierten Zeitintervallen (time slots) stattfindet und das Endgerät bei größerer Entfernung seine Daten früher an die Basisstationen sendet, um die längeren Signallaufzeiten auszugleichen. Das Raster, in dem die Entfernung auf diese Weise bestimmt werden kann, beträgt ungefähr 555 m.

Das UL-TOA-Verfahren (Uplink Time of Arrival) basiert auf der Messung der Signallaufzeiten zwischen Endgerät und Basisstationen und der darauf beruhenden Berechnung der Entfernung zwischen Endgerät und der jeweiligen Basisstation. Bei Erreichbarkeit von mindestens vier Basisstationen kann die Position des Endgerätes bis zu 50 - 150 m genau berechnet werden.

Ein weiteres Verfahren nutzt die Signalstärke eines elektromagnetischen Signals (Signal strength) aus, die bei ungestörter Ausbreitung mit dem Quadrat der Entfernung vom Sender abnimmt. Durch die Messung und Auswertung dieser Signalstärken kann die Entfernung zu Sendeeinheiten berechnet werden. Dieses Verfahren wird in lokalen Funknetzen z.B. in WLAN und WiMax Umgebungen zur Ortung von Endgeräten verwendet. Nachteil ist hier, dass Hindernisse, die sich zudem dynamisch ändern können, die Ausbreitung des Funksignals ebenfalls beinträchtigen, so dass diese Art der Ortung nur ungenau ist.

Des Weiteren werden zur Verbesserung der Ortungsgenauigkeit Vergleichsdaten herangezogen. Diese Vergleichsdaten beinhalten gespeicherte historische Empfangscharakteristika, z.B. Zellidentifikation und Signalstärken, die mit Positionsinformationen aus einer zweiten Quelle verknüpft werden. Bei gleichen Mustern in den Empfangscharakteristika wird auf die zugehörige geographische Position geschlossen.

Der Nachteil all dieser Verfahren ist ihre Ungenauigkeit in Bezug auf die Bestimmung von absoluten Positionsinformationen.

Als weitere Möglichkeit sind relative Ortungs-/Wegstreckenerfassungsverfahren bekannt, die derzeit in Wegstreckenerfassungssystemen im öffentlichen Nah- und Fernverkehr eingesetzt bzw. in Testprojekten regional erprobt werden.

Die get in/get out-Verfahren beruhen auf dem Erkennen und dem Auswerten von Einstiegs- und Ausstiegsereignissen. Hier gibt es derzeit zwei Varianten, nämlich die automatische, berührungslose Detektion mit Hilfe von RFID-Chips und die Annoncierung durch Check-in und Check-out Anrufe durch den Nutzer über Mobiltelefon vor Benutzung und bei Verlassen des Fahrzeugs. Im Falle der RFID-Detektion ist eine entsprechende Infrastruktur an den Ein- und Ausgängen der Fahrzeuge notwendig. Nachteile der nutzerinitiierten Erfassung über Telefon sind der Aufwand für den Nutzer, die Ungenauigkeiten und Uneindeutigkeiten und der fehlende Schutz vor Manipulationen.

Die be in/be out-Verfahren verwenden eine automatische Anwesenheitserkennung im Fahrzeug. Hierzu werden ebenfalls eine spezielle Infrastruktur mit Erfassungssystemen in den Verkehrsmitteln und spezielle aktive Karten benötigt, die mit dem Erfassungssystem aktiv kommunizieren können.

Schließlich gibt es interaktionsbasierte Verfahren, unter denen einfache Wegstreckenerfassungssysteme verstanden werden, die eine Eingabe der Strecke durch den Kunden erfordern. Nachteilig ist hier der Aufwand für den Nutzer und die Abhängigkeit des Systems von der Korrektheit der Nutzerinformationen. Dies eröffnet Raum für etwaige Manipulationen, wodurch solche Ansätze nicht für den Einsatz für Abrechungssysteme geeignet sind.

Der Erfindung liegt somit die Aufgabe zugrunde, ein Verfahren und ein System zur Bestimmung der Wegstreckenübereinstimmung mindestens zweier sich bewegender Objekte zu schaffen, die eine eineindeutige Aussage der tatsächlichen zeitlichen und örtlichen Wegstreckenübereinstimmung treffen können und unabhängig von dynamisch Einflüssen sind.

Diese Aufgabe wird erfindungsgemäß durch die kennzeichnenden Merkmale des Verfahrens- und des nebengeordneten Systemanspruchs in Verbindung mit den Merkmalen der jeweiligen Oberbegriffe gelöst.

Durch die in den Unteransprüchen angegebenen Maßnahmen sind vorteilhafte Weiterbildungen und Verbesserungen möglich.

Die zeitlich/örtliche Wegstreckenübereinstimmung von zwei sich bewegenden Objekten wird über den abschnittsweisen Vergleich protokollierter Empfangscharakteristika bzw. -Parameter funkzellenbasierter Empfangsgeräte bestimmt. Das Verfahren macht sich den Umstand zunutze, dass die Signal- und Identifikationsmuster der Empfangsgeräte bzw. mobilen Kommunikationseinrichtungen bei gleicher Zeit und Strecke in einem Mustererkennungsverfahren eineindeutig zugeordnet werden können.

Erfindungsgemäß ist ein zellenbasiertes Funknetz mit Basisstationen und den mobilen Kommunikationseinrichtungen vorgesehen, wobei jedem Objekt eine Kommunikationseinrichtung zugeordnet ist. Dabei können die Funknetze ein Mobilfunknetz oder ein lokales Funknetz auf der Basis von WiMax(Worldwide Interoperability for Microwave Excess)-Netz, ein WLAN, ein Bluetooth oder dergleichen sein. Es werden in einer Protokollierungseinheit in zeitlichen Abständen technische Parameter als Empfangscharakteristika der Kommunikationsverbindung ausgelesen und protokolliert, wobei als die Empfangscharakteristika bildenden technischen Parameter z.B. die Basisstationsidentifikation, Signalstärken, Übertragungszeiten, Sendeleistung und Signallaufzeiten und dergleichen sein können. Erfindungsgemäß werden die aufgezeichneten Empfangsparameter in einer Vergleichseinrichtung auf ihre Übereinstimmung überprüft und wenn sie zeitlich übereinstimmende Muster aufweisen, wird entschieden, dass beide Objekte den gleichen Weg innerhalb des Funknetzes einnehmen.

Dabei kann die Überprüfung auf Gleichheit bzw. Ähnlichkeit sofort, d.h. online oder im Nachhinein, d.h. offline vorgenommen werden.

Ist die genaue Wegstrecke eines Objektes bekannt, so kann auch eine absolute Wegstreckenbestimmung des zweiten Objektes durchgeführt werden.

Das erfindungsgemäße Verfahren und das erfindungsgemäße System haben den Vorteil, dass der örtliche und zeitliche Wegabgleich im Vergleich zu den Verfahren nach dem Stand der Technik präziser ist, da die zu vergleichenden Empfangsparameter zur gleichen Zeit gemessen werden. Sie sind damit unabhängig von dynamischen Einflüssen, wie z.B. sich bewegenden Basisstationen, Wettererscheinungen oder Reflexionen durch sich bewegende Objekte. Zum Vergleich sind keine theoretischen Daten und keine historische Daten und zur Bestimmung der Übereinstimmung von Wegstrecken keinerlei geografische Positionsinformationen notwendig. Der Aufbau des Erfassungssystems kann weitestgehend bestehende Infrastrukturen nutzen.

Die Vorteile gegenüber im Stand der Technik angegebenen bestehenden Lösungen sind im Einzelnen die folgenden. Gegenüber einer Wegstreckenbestimmung mittels funkbasierten Ortungstechniken zeichnet sich die Erfindung durch eine höhere Genauigkeit aus. Gegenüber einer Wegstreckenbestimmung per satellitengestützter Ortung hat das erfindungsgemäße Verfahren bzw. das erfindungsgemäße System eine höhere Verfügbarkeit, z.B. im unterirdischen Bereich. Gegenüber den automatischen Wegstreckenerfassungssystemen auf Basis von RFID-Tags oder aktiven Karten, zeichnet sich die Erfindung durch eine weitestgehende Nutzungsmöglichkeit bestehender Infrastrukturen, wie Mobilfunknetze (GSM, UMTS oder dergleichen) oder lokale Funknetze, wie WLAN, Bluetooth, WiMax-Netze aus. Gegenüber interaktionsbasierten Wegerfassungssystemen weist die Erfindung einen erhöhten Nutzerkomfort und eine bessere Manipulationssicherheit auf.

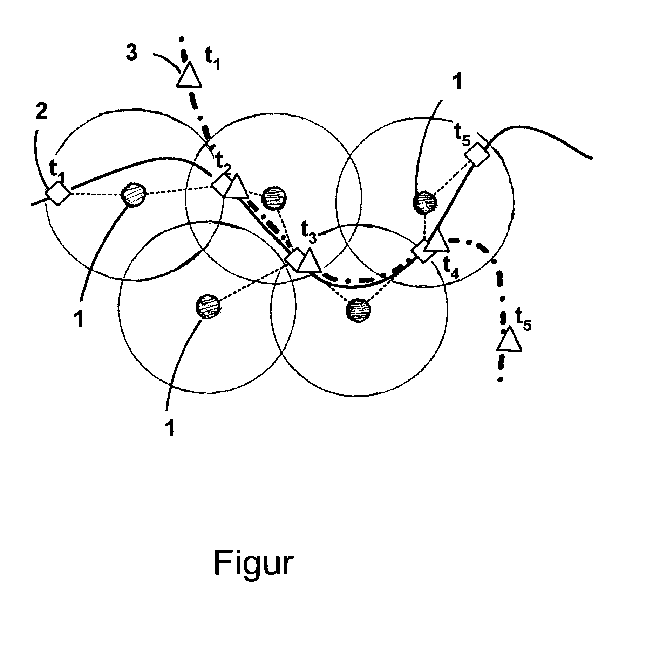

Ein Ausführungsbeispiel der Erfindung ist in der Zeichnung dargestellt und wird in der nachfolgenden Beschreibung zusammen mit dem erfindungsgemäßen Verfahren näher erläutert.

Die einzige Figur zeigt eine schematische Darstellung des erfindungsgemäßen Systems zur Bestimmung der Wegstreckenübereinstimmung mindestens zweier sich bewegender Objekte.

Das in der Figur dargestellte Funknetz weist mehrere Basisstationen 1 auf, deren Aktionsradius durch die Kreise angedeutet ist. Dabei können die Basisstationen 1 stationär sein, es können aber auch sich bewegende Basisstationen eingesetzt werden. Bei dem Funknetz ist es nicht von Belang, ob es sich um ein lokales, regionales oder überregionales Funknetz handelt. Beispiele für einsetzbare Funknetze sind Mobilfunknetze (GSM, UMTS usw.), WLAN und WiMax-Netze, letztere als lokale Funknetze. Es sind im dargestellten Ausführungsbeispiel zwei zu untersuchende Objekte 2, 3 vorgesehen, wobei der Weg des einen durch die durchgezogene Linie und des anderen durch die Strich-Punkt-Linie repräsentiert ist. Beide zu untersuchende Objekte sind mit mobilen Kommunikationseinrichtungen, die als Endgeräte ausgebildet sind, für zellenbasierte drahtlose Funknetze ausgestattet. Beispielsweise können in einem GSM-Mobilfunknetz als Endgeräte GSM-Modems und GSM-Mobilfunkgeräte mit lokalen Signalverarbeitungsmöglichkeiten eingesetzt werden. Beide Endgeräte der Objekte 2, 3 müssen das gleiche Funknetz verwenden, allerdings können auch mehrere Funknetze genutzt werden, soweit beide Objekte 2, 3 mit Empfängern für diese Netze ausgestattet sind.

Die Sende- und Empfangssignale der Kommunikationsverbindung jedes der beiden Endgeräte 2, 3 mit den jeweiligen Basisstationen 1 sind hinsichtlich ihrer technischen Parameter bzw. Charakteristika unter anderem abhängig von den Eigenschaften der Basisstation, wie z.B. der Ausbildung der Antenne, der Ausrichtung oder der Signalstärke, von der geographischen Lage der Endgeräte zur Basisstation 1, von räumlichen Gegebenheiten, z.B. Reflexion durch andere Objekte, wie Gebäude und dergleichen, und dynamischen Einflüssen, wie Wettererscheinungen usw.

Die technischen Parameter der Kommunikationsverbindung selbst sind beispielsweise die Identifikation der eingebuchten Basisstationen 1, die Identifikation der erreichbaren Basisstationen 1, die beim Endgerät der Objekte 2, 3 gemessenen Signalstärken der jeweiligen Basisstationen 1, d.h., die messbaren Sendeleistungen, Signallaufzeiten zwischen Endgeräten der Objekte 2, 3 und Basisstationen 1, Übertragungszeiten und dergleichen. Derartige Parameter werden in zeitlichen Abständen in einer Protokollierungseinrichtung protokolliert, wobei die Protokollierungseinrichtung lokal auf den jeweiligen Endgeräten der Objekte 2, 3 oder auch in den Basisstationen 1 oder auch in einem für das Funknetz vorgesehenen zentralen Server oder Rechner installiert sein kann.

Während der Bewegung der Objekte 2, 3 ändern sich die Verbindungscharakteristika in Form der technischen Parameter aufgrund der Änderung der Lage der Endgeräte der Objekte 2, 3 zu den erreichbaren Basisstationen 1. In zeitlichen Abständen, die durch Zeiten t₁, t₂, t₃, t₄ und t₅ gegeben sind, werden die relevanten technischen Parameter protokolliert. Wie zu erkennen ist, stimmen die Wegstrecken der zwei Objekte 2, 3 zum Zeitpunkt t₁ und t₅ nicht überein, während sie zu den Zeitpunkten t₂, t₃ und t₄ gleich sind. In der Figur sind die Aufzeichnungszeitpunkte so dargestellt, als ob sie für die zwei Objekte synchronisiert sind. Dies muss nicht unbedingt so sein. Eine zeitliche Synchronisierung kann aber je nach geforderter Genauigkeit des Verfahrens, Protokollierungs-Aufzeichnungsrate, und Geschwindigkeit der Objekte notwendig werden.

Bei funkzellen-basierten Ortungsverfahren werden die technischen Parameter verwendet, um Positionsinformationen für ein Endgerät zu erhalten, was im Allgemeinen ungenau ist. Bei dem erfindungsgemäßen Verfahren ist die Ungenauigkeit der absoluten Positionsdaten irrelevant, da die Werte der technischen Parameter lediglich mitprotokolliert werden. Die Aufzeichnung wird in Form einer Zeitreihe für jedes Objekt 2, 3 durchgeführt, wobei die gemessenen Parameter zusammen mit dem Messzeitpunkt abgespeichert werden. Der minimal notwendige zeitliche Abstand der Aufzeichnungsschritte ist von der Dichte der Basisstationen 1 und der Geschwindigkeit der Objekte abhängig, um eine eineindeutige Zuordnungsmöglichkeit zu gewährleisten.

Die aufgezeichneten Daten werden für die Bestimmung der Übereinstimmung in einer Vergleichseinrichtung verglichen. Die Protokolle werden z.B. über Algorithmen durch Feststellung von gleichen oder ähnlichen Mustern auf Gleichheit oder Ähnlichkeit überprüft, wobei diese Überprüfung laufend, d.h. online oder im Nachhinein, d.h. offline durchgeführt werden kann. Zeitabschnitte, in denen die Protokolle gleiche bzw. ähnliche Muster aufweisen, werden so interpretiert, dass beide Objekte den gleichen Weg innerhalb des Funknetzes nehmen bzw. genommen haben. Die Vergleichseinrichtung kann in einem zentralen Server eingerichtet sein.

In dem dargestellten Ausführungsbeispiel legen die Objekte 2, 3 eine gemeinsame Wegstrecke zwischen den Protokollierungszeitpunkten t₂, t₃ und t₄ zurück (zur Verdeutlichung sind diese Zeitpunkte in größeren Abständen aufgezeichnet), d.h., der Rechner oder Server wertet die von den Endgeräten der Objekte 2, 3 aufgezeichneten Parameter in zeitlicher Zuordnung auf ihre Musterübereinstimmung aus und liefert als Ergebnis die Übereinstimmung der Wegstrecken zwischen den Abfragezeitpunkten t₂ - t₄. Wenn beispielsweise das Objekt 2 eine genaue, vorgegebene Wegstrecke zurücklegt, kann auch für das Objekt 3 eine absolute Wegstrecke bestimmt werden.

Aus den Zeitintervallen, in denen beide Objekte gleichzeitig eine gemeinsame Wegstrecke zurückgelegt haben, können statistische Aussagen abgeleitet werden, z.B. Gesamtdauer, Anzahl der Abschnitte bzw. Zeitintervalle, durchschnittliche Länge eines Abschnitts usw.

Im Folgenden wird ein genaues Ausführungsbeispiel der Erfindung zur wegstrecken-abhängigen Fahrpreisbestimmung und Navigation im öffentlichen Verkehrsnetz unter der Nutzung von bestehenden GSM-Netzen beschrieben. Zur Vereinfachung werden die beiden für die Wegstreckenübereinstimmung zu vergleichenden Objekte als Referenzobjekt und als Bestimmungsobjekt bezeichnet. Das Untersuchungsziel ist dabei, festzustellen, ob die Wegstrecke des Bestimmungsobjekts mit der des Referenzobjekts übereinstimmt. Im vorliegenden Fall soll genau bestimmt werden, welches Verkehrsmittel als Referenzobjekt ein Nutzer als Bestimmungsobjekt in welchen Wegabschnitten zu welchem Zeitpunkt genutzt hat.

Die Verkehrsmittel, wie Busse, Straßenbahnen, S-Bahnen und U-Bahnen als Referenzobjekte werden mit einem GSM-Modul als Endgerät und im Falle der Endgeräte-basierten Aufzeichnung mit einer Protokollierungs- und Daten-Übertragungseinheit ausgerüstet. Die Nutzer müssen gleichfalls ein GSM-fähiges Mobilfunkgerät besitzen, auf das im vorliegenden Fall ebenfalls eine entsprechende Protokollierungs- und Datenübertragungssoftware installiert wird. Eine Empfangseinheit für die Daten der Endgeräte, vorzugsweise per GPRS (General Packet Radio Service) und ein zentraler Server zur Erkennung und Auswertung der Streckenübereinstimmung ist weiterhin vorgesehen.

Die Protokollierungssoftware der Verkehrsmittel wird bei Betriebsbeginn aktiviert und es werden die erfassten Zeitreihendaten unter Verwendung der technischen Parameter an den Zentralserver in Abständen, z.B. bei jedem Haltepunkt oder bei Betriebsende an den Zentralserver übertragen. Bei Nutzung des öffentlichen Verkehrsnetzes schaltet der Nutzer bzw. der Verkehrsteilnehmer die Protokollierungssoftware auf seinem Mobilfunkgerät ein, was gleichzeitig den elektronischen Fahrschein repräsentiert. Auch hier werden die Zeitreihendaten in Intervallen, z.B. bei Beendigung der Fahrt und beim Abschalten der Protokollierungssoftware durch den Nutzer an den Zentralserver übertragen. Letzterer wertet mit Hilfe entsprechender Algorithmen die Zeitreihendaten des Verkehrsmittels und des Nutzers hinsichtlich der Musterübereinstimmung aus und bestimmt daraus den Fahrpreis für die zurückgelegte Strecke, der dem Nutzer mitgeteilt wird.

Das erfindungsgemäße Verfahren und das entsprechende System kann für die unterschiedlichsten Zwecke verwendet werden, neben der schon erwähnten Nutzung als Zugangs- und Abrechungssystemen im öffentlichen Verkehr kann eine relative/absolute Ortung für mobile Dienste (location-based services), z.B. Navigationsdienste durchgeführt werden. Weiterhin sind auch Zugangs- und Abrechungssysteme für Mietfahrzeuge als Nutzung der Erfindung denkbar.

## Patentansprüche

1. Verfahren zur Bestimmung der Wegstreckenübereinstimmung mindestens zweier sich bewegender Objekte über mindestens ein zellenbasiertes Funknetz mit Basisstationen (1) und mobilen Kommunikationseinrichtungen, wobei jedem Objekt (2,3) eine Kommunikationseinrichtung zugeordnet ist,
**dadurch gekennzeichnet ,**
**dass** in zeitlichen Abständen Empfangsparameter der den Objekten (2,3) zugeordneten mobilen Kommunikationseinrichtungen aufgezeichnet werden, die aufgezeichneten Empfangsparameter auf ihre Übereinstimmung überprüft werden und wenn die Empfangsparameter zeitlich übereinstimmende Muster aufweisen, entschieden wird, dass beide Objekte (2,3) den gleichen Weg innerhalb des Funknetzes nehmen oder genommen haben.

2. Verfahren nach Anspruch 1, **dadurch gekennzeichnet, dass** die Übereinstimmung auf der Grundlage der Gleichheit/Ähnlichkeit der Empfangsparameter unter Verwendung von Musterkennungsverfahren festgestellt wird.

3. Verfahren nach Anspruch 1 oder Anspruch 2, **dadurch gekennzeichnet, dass** die zeitlichen Abstände zwischen der Aufzeichnung der Empfangsparameter abhängig von der Dichte der Basisstationen (1) und/oder der Geschwindigkeit der Objekte (2,3) und/oder der gewünschten Genauigkeit gewählt werden.

4. Verfahren nach einem der Ansprüche 1 bis 3, **dadurch gekennzeichnet, dass** bei Übereinstimmung der Empfangsparameter weitere Informationen, wie Länge der Wegstrecke, Gesamtdauer der Übereinstimmung, Anzahl der zeitlichen Abstände, durchschnittliche Länge bei einem zeitlichen Abstand oder dergleichen abgeleitet werden.

5. Verfahren nach einem der Ansprüche 1 bis 4, **dadurch gekennzeichnet, dass** als technische Parameter unter anderem die gemessene Sendeleistung, Signallaufzeiten, Übertragungszeiten, Identifikationsdaten der erreichbaren und/oder eingebuchten Basisstationen aufgezeichnet werden.

6. Verfahren nach einem der Ansprüche 1 bis 5, **dadurch gekennzeichnet, dass** die Überprüfung der Empfangsparameter auf Übereinstimmung sofort oder im Nachhinein durchgeführt wird.

7. System zur Bestimmung der Wegstreckenübereinstimmung mindestens zweiter sich bewegender Objekte über mindestens ein zellenbasiertes Funknetz mit Basisstationen (1) und mobilen Kommunikationseinrichtungen, wobei jedes Objekt (2,3) eine Kommunikationseinrichtung aufweist, **gekennzeichnet durch** eine Protokollierungseinrichtung zum Aufzeichnen von Empfangsparametern der den Objekten (2,3) zugeordneten mobilen Kommunikationseinrichtung in einem zeitlichen Abstand und eine Vergleichseinrichtung zum Vergleich der Empfangsparameter der mobilen Kommunikationseinrichtungen der mindestens zwei Objekte (2,3) und zu ihrer Überprüfung auf Gleichung und/oder Ähnlichkeit.

8. System nach Anspruch 7, **dadurch gekennzeichnet, dass** die Basisstationen (1) stationäre oder mobile Basisstationen sind.

9. System nach Anspruch 7 oder 8, **dadurch gekennzeichnet, dass** das zellenbasierte Funknetz als Mobilfunknetz, wie GSM- oder UMTS-Netze, oder als lokales Funknetz, wie WLAN, Bluetooth, WiMax-Netz ausgebildet ist.

10. System nach einem der Ansprüche 7 bis 9, **dadurch gekennzeichnet, dass** die Protokollierungseinrichtung in der mobilen Kommunikationseinrichtung (2, 3) oder einer Basisstation (1) oder in einem zum Funknetz gehörenden Rechner vorgesehen ist.

11. System nach einem der Ansprüche 7 bis 10, **dadurch gekennzeichnet, dass** die mobilen Kommunikationseinrichtungen als Modems oder Mobilfunkgeräte ausgebildet sind.

12. Verwendung des Systems nach einem der Ansprüche 7 bis 11 für eine wegstreckenabhängige Fahrpreisbestimmung bei Nutzung von Verkehrsmitteln, wobei die Verkehrsmittel mit einem GSM-Modem mit Protokollierungseinheit und Datenübertragungseinheit und der Verkehrsteilnehmer mit einem GSM-fähigen Mobilfunkgerät mit Protokollierungssoftware und Datenübertragungssoftware ausgerüstet sind und die protokollierten Daten des Verkehrsmittels und des Verkehrsteilnehmers zu einem zentralen Rechner zur Wegstreckenbestimmung und Fahrpreisauswertung übertragen werden.
